# EUROPÄISCHE PATENTSCHRIFT

(11) **EP 1 739 219 B1**
(45) Veröffentlichungstag und Bekanntmachung des Hinweises auf die Patenterteilung: **24.12.2008**
(21) Anmeldenummer: 06009820.9
(22) Anmeldetag: 12.05.2006
(51) Int. Cl.: D04C 3/40

(54) **Flechtvorrichtung**
Braiding apparatus
Dispositif de tressage

(30) Priorität: 02.07.2005 DE 102005031039
(43) Veröffentlichungstag der Anmeldung: 03.01.2007
(73) Patentinhaber: Bayerische MotorenWerke Aktiengesellschaft, 80809 München (DE)
(72) Erfinder: Schmitz, Armin, 84163 Marklkofen (DE); Pfitzer, Hanno, 84095 Furth (DE)

(56) Entgegenhaltungen:
- EP-A- 0 272 783
- EP-A- 0 327 085
- DE-A1- 4 004 474
- FR-A- 2 620 375
- US-A- 2 694 661
- US-A- 5 468 327
- US-A1- 2004 098 099

## Beschreibung

Die Erfindung bezieht sich auf eine Vorrichtung zum Beflechten eines örtlich radial vertieften Formkerns, nach dem Oberbegriff des Patentanspruchs 1.

Beim Bewickeln oder Beflechten von Formkernen mit Faserverbund-Faserstrukturen, welche als Vorformlinge zusammen mit einer Kunststoffmatrix in einem Formwerkzeug unter Druck- und Wärmeeinwirkung zu einem Faserverbundbauteil weiterverarbeitet werden, stellt sich an konturierten Formkernen das Problem, dass sich die Verstärkungsfasern beim Wickei/Flechtprozess aufgrund der Faserspannung nicht an die radial vertieften Kernbereiche anlegen, sondern diese frei überspannen und/oder an der Kernkontur abgleiten und daher die gewünschte Faserausrichtung verlorengeht. Die Folge ist ein hoher Bauteilausschuss aufgrund von örtlichen Fehlerstellen in der Faserverbundstruktur. Lösungen wie sie aus EP 0 327 085 A bekannt sind, haben den Nachteil, eine Reibkraft auf die Verstärkungsfasern auszuüben, was zu Faserverschiebung oder Sogar-beschädigung führen kann.

Aufgabe der Erfindung ist es, ein Verfahren und eine Vorrichtung der eingangs genannten Art so auszubilden, dass auch beim Bewickeln oder Beflechten von konturierten Formkernen mit örtlich radial reduzierten Kernbereichen eine an der Kernkontur durchgehend anliegende, von Faser-Fehlorientierungen freie Faserstruktur erhalten wird, wobei kein Faserbeschädigungsrisiko entsteht.

Diese Aufgabe wird erfindungsgemäß durch das im Patentanspruch 1 gekennzeichnete Verfahren gelöst.

Erfindungsgemäß werden die Verstärkungsfasern unter der Wirkung der äußeren Presskraft unmittelbar nach der Faserablage in die örtlich vertieften Formkernbereiche eingezogen und an der Kernkontur verschiebefest fixiert, so dass sich der so gefertigte Vorformling ohne unzulässige Überspannungen, Fehlorientierungen oder gar Bruchstellen in der Faserstruktur mit geringer Ausschussrate zu einem qualitativ hochwertigen Faserverbundbauteil weiterverarbeiten lässt.

Da die Anzahl der Bindungs- und Umlenkstellen und somit die Lagestabilität der Verstärkungsfasern in der Faserstruktur mit wachsender Entfernung von der Faserablagestelle stetig zunimmt, kann das Fasergeflecht bereits in relativ kurzem Abstand zur Faserablagestelle von der Presskraft entlastet werden, aus Sicherheitsgründen werden dann jedoch, die Verstärkungsfasern im Vorformling durch ein Bindemittel lagefixiert. Der Formkern kann vorzugsweise mehrlagig bewickelt und dabei werden die Verstärkungsfasern beim Ablegen jeder einzelnen Faserlage presskraftbeaufschlagt.

Um die erfindungsgemäße Vorrichtung unverändert für unterschiedlich konturierte Formkerne verwenden zu können, enthält die presskrafterzeugende Spanneinheit zweckmäßigerweise eine flexible, unter äußerer Druckbeaufschlagung an die Verstärkungsfasern angedrückte Membran, welche vorzugsweise als synchron zur Faserablagestelle über die Faserlage(n) gestülpter Rollschlauch ausgebildet ist. die Spanneinheit, besteht aus einer oder mehreren, mehrteiligen, den Formkern schalenförmig umgreifenden Spannzangen, die an ihrer faserlagenseitigen Innenfläche mit der flexiblen, selektiv druckbeaufschlagten Membran versehen sind und während des Wickel/Flechtprozesses nach Art einer umlaufenden Raupe fortschreitend an den Formkern angelegt werden (siehe Anspruch 1).

Die Erfindung wird nunmehr anhand zweier Ausführungsbeispiele in Verbindung mit den Zeichnungen näher erläutert. Es zeigen in stark schematisierter Darstellung:
- **Fig. 1**: eine Flechtvorrichtung nach der Erfindung im Längsschnitt;
- **Fig. 2**: eine vergrößerte Teildarstellung der Flechtvorrichtung nach Fig. 1;
- **Fig. 3**: eine perspektivische Ansicht einer Spanneinheit in Form einer Spannzange; und
- **Fig. 4**: eine der Fig. 1 entsprechende Darstellung einer Flechtvorrichtung mit raupenförmig umlaufenden Spannzangen.

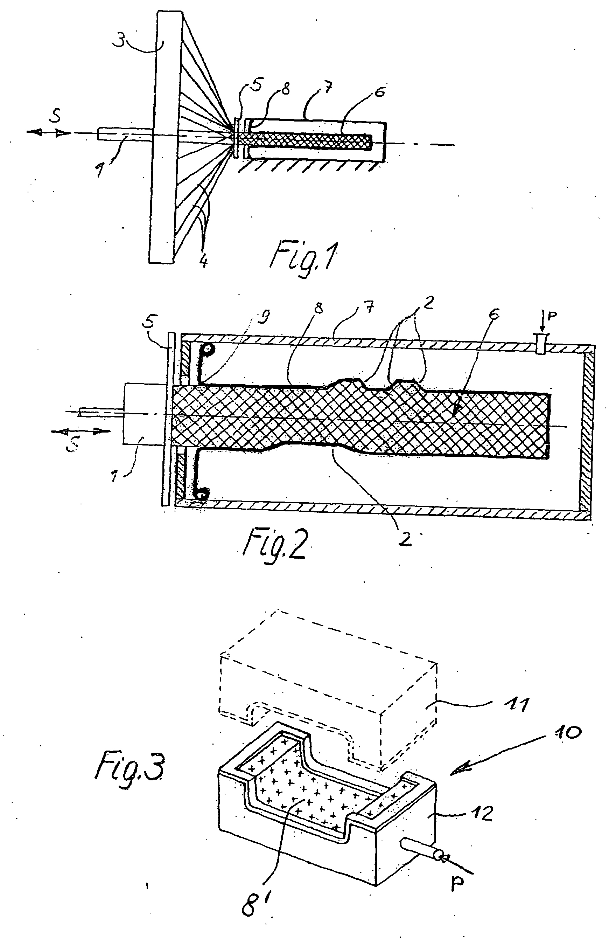

Die in den Fig. gezeigte Vorrichtung dient zum Beflechten eines linear in Längsrichtung S verschieblich geführten, konturierten Formkerns 1, etwa eines mit einer Folie belegten Sandkerns, welcher mit örtlich radial vertieften Kernbereichen 2 (Fig. 2) versehen ist, und enthält einen koaxial zum Formkern 1 angeordneten Spulenträger 3, auf dem sich die - nicht gezeigten - Vorratsspulen für die Faserverbund-Verstärkungsfasern 4 befinden, welche auf dem Wege über ein Flechtauge 5 auf dem Formkern 1 unter Bildung einer zu diesem formgleichen Faserstruktur 6 abgelegt werden.

Während des Flecht― oder Wickelprozesses wird der Formkern 1 in einen Druckbehälter 7 eingefahren, welcher auf Seiten des Formkerns 1 durch eine flexible, nach Art eines Rollschlauchs sackförmig gestaltete Elastomermembran 8 begrenzt ist. Beim Einfahren des Formkerns 1 in den Behälter 7 wird die Membran 8 mehr und mehr abgerollt und über den Formkern 1 gestülpt, und in dem durch die Membran 8 abgedichteten Behälterinnenraum wird ein Druck p von etwa 1 bis 2 bar aufgebaut, unter dessen Wirkung die Membran 8 und folglich auch die Verstärkungsfasern 4 an die Kernkontur angepresst werden. Dabei ist zu beachten, dass der spulenträgerseitige Kontaktbereich 9 der Membran 8 am Formkern 1 möglichst nahe an der Faserablagestelle (am Flechtauge 5) gelegen ist, damit so wenig Bindungs- und Umlenkstellen wie möglich im Geflecht 6 zwischen Faserablage und Membran 8 vorhanden sind und dadurch ein störungsfreies Nachführen der Fasern 4 in die vertieften Kernbereiche 2 möglich ist.

Nachdem der Formkern 1 vollständig mit einer Faserlage beflochten ist, wird der Behälter 7 druckentlastet und der Kern 1 ausgefahren, woraufhin die nächste Faserlage in gleicher Weise aufgebracht oder der aus Formkern 1 und Flechtstruktur 6 bestehende Vorformling einem (nicht gezeigten) Formwerkzeug zur Herstellung eines entsprechenden Faserverbundbauteils zugeführt werden kann. Um die Lagestabilität der Verstärkungsfasern 4 in der Flechtstruktur 6 nach der Presskraftentlastung zu verbessern, können diese bis zur Weiterverarbeitung des Vorformlings zusätzlich durch ein Bindemittel auf dem Formkern 1 lagefixiert werden.

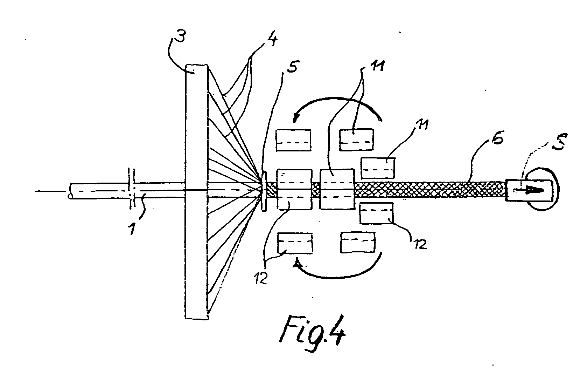

Nach der erfindungsgemäßen, in den Fig. 3 und 4 dargestellten Ausführung, wo die Fig 1 und 2 entsprechenden Komponenten durch das gleiche Bezugszeichen gekennzeichnet sind, besteht die Spanneinheit aus einer mehrteiligen Spannzangenanordnung 10, die wiederum kurz hinter der Faserablagestelle unter Zwischenlage des Fasergeflechts 6 an den Formkern 1 angelegt wird. Wie aus Fig.3 zu ersehen ist, enthält jede Spannzange 10 ein oberes und ein unteres Schalenteil 11, 12, welches im Kontaktbereich zu dem ― in Fig. 3 der Deutlichkeit halber nicht gezeigten ― Formkern 1 eine flexible Elastomermembran 8' aufweist, welche auf der Rückseite mit einem Druckluftpolster beaufschlagt ist. Hierdurch wird gewährleistet, dass sich die Membran 8' selbsttätig an die Kernkontur anpasst und auf die Fasern nahe der Faserablagestelle eine quer zur Faserlängsrichtung wirkende Presskraft ausübt, die die Fasern in die vertieften Kernbereiche eindrückt und ein Nachführen der fehlenden Faserlänge bewirkt.

Um den Prozess zu automatisieren, kann der Formkern 1 robotergesteuert werden und die Spannzangenanordnung 10 aus mehreren, raupenförmig umlaufenden Einzelzangen bestehen (Fig. 4), die entsprechend dem Wickelfortschritt nahe der Faserablagestelle an den Formkern 1 angelegt und nach einer für die Stabilisierung der FLechtstruktur 6 ausreichenden Anlagestrecke automatisch abgenommen und zur Faseranlagestelle rückgeführt werden. Im Übrigen ist die Bau- und Funktionsweise die gleiche wie bezüglich Fig.1 und 2 beschrieben..

## Patentansprüche

1. Vorrichtung zum Beflechten/Bewickeln eines örtlich radial vertieften Formkerns (1) mit einer aus Faserverbund-Verstärkungsfasern (4) bestehenden Faserstruktur (6), mit einem relativ zum Formkern beweglichen Spulenträger (3) und einer beim Belegen des Formkerns (1) bewegungskonform zur Faserablagestelle in Kernlängsrichtung verstellbaren, die Verstärkungsfasern (4) zumindest in den örtlich vertieften Kernbereichen (2) fortschreitend an den Formkern (1) andrückenden Spanneinheit (8, 8', 10, 11), wobei die Spanneinheit mehrere, in Längsrichtung des Formkerns (1) aufeinander folgende, den Formkern (1) unter Zwischenlage der Faserlage(n) schalenförmig umgreifende Spannzangen (10) enthält, **dadurch gekennzeichnet, dass** die Spannzangen umlaufend fortschreitend an den Formkern (1) angelegt werden.

2. Vorrichtung nach Anspruch 1, **dadurch gekennzeichnet, dass** die Spannzangen eine unter äußerer Druckbeaufschlagung (p) an die Verstärkungsfasern (4) angedrückte, flexible Membran (8') enthält.

## Claims

1. A device for braiding or wrapping a locally radially recessed mould core (1), comprising a fibre structure having a structure (6) made up of composite reinforcing fibres (4), a magazine (3) movable relative to the mould core and a clamping unit (8, 8', 10, 11) which, when the mould core (1) is wrapped, is adjustable in accordance with the movement in the longitudinal direction of the core, relative to the place where the fibres are deposited, and continuously presses the reinforcing fibres (4) against the mould core (1) at least in the locally recessed core regions (2), wherein the clamping unit contains a number of tongs (10) which follow one another in the longitudinal direction of the mould core (1) and surround the mould core (1) like shells with interposition of the layer or layers of fibre, **characterised in that** the tongs are continuously applied around the mould core (1).

2. A device according to claim 1, **characterised in that** the tongs contain a flexible diaphragm (8) which is pressed against the reinforcing fibres (4) under external pressure (p).

## Revendications

1. Dispositif de tressage/enveloppement d'un noyau de moule (1) ayant radialement une cavité, à l'aide de fibres composites/fibres de renforcement (4) constituant une structure de fibres (6), avec un support de bobine (3) mobile par rapport au noyau de moule ainsi qu'une unité de tension (8, 8', 10, 11) réglable lors du garnissage du noyau de moule (1) de façon conforme au mouvement par rapport au point de dépose des fibres dans la direction longitudinale du noyau, et appliquant les fibres de renforcement (4) progressivement contre le noyau de moule (1), au moins dans les zones de noyau (2) localement creuses,
l'unité de tension comportant plusieurs pinces (10) se suivant dans la direction longitudinale du noyau de moule (1) en forme de coquille et entourant le noyau de moule (1) avec interposition de la ou des couches de fibres,
**caractérisé en ce que**
les pinces de serrage sont appliquées de manière périphérique en continu contre le noyau de moule (1).

2. Dispositif selon la revendication 1,
**caractérisé en ce que**
les pinces de serrage comportent une membrane souple (8') appliquée contre les fibres de renforcement (8) sous l'effet d'une sollicitation en pression (p), extérieure.
